# EUROPEAN PATENT APPLICATION

(11) **EP 2 631 763 A2**
(43) Date of publication of application: **28.08.2013**
(21) Application number: 13155512.0
(22) Date of filing: 15.02.2013
(51) Int. Cl.: G06F 3/0484, G06F 3/0488

(54) **Method and Apparatus for Content View Display in a Mobile Device**

(30) Priority: 24.02.2012 KR 20120018779
(71) Applicant: Samsung Electronics Co., Ltd, Gyeonggi-do 443-742 (KR)
(72) Inventor: Joo, Jongsung, 443-742 Gyeonggi-do (KR); Yang, Huichul, 443-742 Gyeonggi-do (KR); Heo, Seunghyuck, 443-742 Gyeonggi-do (KR)
(74) Representative: Birchenough, Lewis

(57) **Abstract**

A content view display method and apparatus allow a user to intuitively use contents regardless of any change of a display mode between a landscape mode and a portrait mode by maintaining an arrangement of the contents even though the display mode is changed. The method for displaying a content view includes simultaneously displaying at least two pages of the content view in the landscape mode, and displaying at least one of the pages of the content view when the display mode of the mobile device is changed from the landscape mode to the portrait mode. Each page of the content view includes a plurality of panels. Content is located in each of the panels. An arrangement of the panels is maintained regardless of a change of the display mode.

## Description

### BACKGROUND OF THE INVENTION

### 1. Field of the Invention

The present invention relates generally to a method and apparatus for displaying content and, more particularly, although not exclusively, to a method and apparatus for displaying content in consideration of a screen display mode, for a mobile device.

### 2. Description of the Related Art

With the remarkable growth of related technologies, a great variety of mobile devices are becoming increasingly popular. In particular, mobile devices have outgrown their respective traditional use and hence a mobile device convergence has been reached, in which multiple technologies that were traditionally implemented in separate devices are now often combined in a single device.

In the related art, a mobile device can display content, for example in the form of a content view, which refers to a screen on which an amount of content, or a number of items of content, are arranged and displayed on the screen. Herein, the content forming the content view (e.g. the content displayed on the screen) may comprise a subset of an overall set of content, or may comprise the entire content of an overall set of content. Content may include, for example, text, images, documents, icons, thumbnails, application executing screens, and the like.

Additionally, a mobile device in the related art provides a dual display mode, which herein refers to a landscape mode and a portrait mode. Specifically, the landscape mode is defined herein to be a view in which, when content displayed on a screen is viewed upright, the width of the screen is greater than the height. In contrast, the portrait mode is defined herein to be a view in which, when the content displayed on the screen is viewed upright, the height of the screen is greater than the width.

In the related art, a mobile device may have a sensor for detecting rotation or changes of orientation of the mobile device. Based on detection information from the sensor, such a mobile device can determine and select a display mode. Also, the mobile device in the related art can automatically change the form of a content view to meet the selected display mode. For example, a mobile device in the related art can change the size of content, a space between contents, and the like. Therefore, contents may be arranged differently while the form of a content view is not changed. Rearrangement of a content view may be irrelevant to a user's intention, thus causing visual inconvenience and acting as hindrance to an intuitive use of contents.

### BRIEF SUMMARY OF THE INVENTION

It is an aim of certain exemplary embodiments of the present invention to address, solve, mitigate or obviate, at least partly, at least one of the problems and/or disadvantages associated with the related art, for example the above-mentioned problems and/or disadvantages. Certain embodiments aim to provide at least one of the advantages described below.

Accordingly, certain embodiments of the present invention provide a content view display method and apparatus that allow a user to intuitively use contents regardless of the change of a display mode by maintaining an arrangement of contents even though a display mode is changed.

Certain embodiments of the present invention provide an edit screen for a content view in consideration of a dual display mode.

According to one aspect of the present invention, a method for displaying a content view for a mobile device providing a dual display mode, the method comprising the steps of: simultaneously displaying at least two pages of the content view in a landscape mode; and displaying at least one of the pages of the content view when a display mode of the mobile device is changed from the landscape mode to a portrait mode, wherein each page of the content view includes a plurality of panels, wherein content is located in one or more of the panels, and wherein the arrangement of the panels is maintained regardless of a change of the display mode.

According to another aspect of the present invention, an apparatus for displaying a content view for a mobile device providing a dual display mode, the apparatus comprising: a display unit configured to simultaneously display at least two pages of the content view in a landscape mode or to display at least one of the pages of the content view; and a control unit configured to control the display unit so as to change a display mode from the landscape mode to the portrait mode, wherein each page of the content view includes a plurality of panels, wherein content is located in one or more of the panels, and wherein arrangement of the panels is maintained regardless of a change of the display mode.

The arrangement of the panels may refer, for example, to the relative positions of the panels, and/or the relative or absolute sizes of the panels.

The above-discussed method and apparatus allow a user to intuitively use contents regardless of the change of a display mode by maintaining the arrangement of contents even though a display mode is changed. Also, an edit screen in which pages of a content view are divided is provided, so that a user can dispose of contents when editing a content view.

Another aspect of the present invention provides a computer program comprising instructions arranged, when executed, to implement a method, and/or apparatus, in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, and features and advantages of certain exemplary embodiments and aspects of the present invention will be more apparent from the following detailed description when taken in conjunction with the accompanying drawings, in which:
FIG. 1 is a block diagram illustrating an example configuration of a mobile device in accordance with an exemplary embodiment of the present invention.
FIG. 2 is a block diagram illustrating a detailed example configuration of a control unit shown in FIG. 1.
FIG. 3 is a flow diagram illustrating a content view display method in accordance with the exemplary embodiment of the present invention.
FIG. 4 is a flow diagram illustrating a content view display method in accordance with an alternative exemplary embodiment of the present invention.
FIG. 5 is a flow diagram illustrating a content view display method in accordance with a further alternative exemplary embodiment of the present invention.
FIGS. 6 to 10B show screenshots illustrating a content view display method in accordance with the exemplary embodiment of the present invention.
FIG. 11 shows screenshots illustrating a content view display method in accordance with the alternative exemplary embodiment of the present invention.
FIG. 12 shows screenshots illustrating a content view display method in accordance with the further alternative exemplary embodiment of the present invention.

### DETAILED DESCRIPTION OF THE INVENTION

Exemplary, non-limiting embodiments of the present invention will now be described more fully with reference to the accompanying drawings to assist in a comprehensive understanding of the present invention, as defined by the claims. The present invention may, however, be embodied in many different forms and should not be construed as limited to the exemplary embodiments set forth herein. The principles and features of the present invention may be employed in varied and numerous embodiments without departing from the scope of the invention. Those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

Furthermore, well known or widely used techniques, constructions, elements, structures, functions and processes may not be described or illustrated in detail for clarity and conciseness and to avoid obscuring the essence of the present invention. The same or similar reference numbers may be used throughout the drawings to refer to the same or similar parts. Although the drawings represent exemplary embodiments of the invention, the drawings are not necessarily to scale and certain features may be exaggerated or omitted in order to better illustrate and explain the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise, and where the indefinite article is used, the specification is to be understood as contemplating plurality as well as singularity, unless the context requires otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Also, terms described herein, which are defined considering the functions of embodiments of the present invention, may be implemented differently depending on user and operator's intention and practice. Therefore, the terms should be understood on the basis of the disclosure throughout the specification.

Among the terms set forth herein, a terminal refers to any kind of device capable of displaying content. For example, a terminal may comprise any kind of device capable of processing data which is transmitted or received to or from any external entity. The terminal may display icons, menus or other graphical elements on a screen to which stored data and various executable functions are assigned or mapped. A terminal in embodiments of the present invention may be in the form of, for example, a computer, a notebook, a tablet PC, a mobile device, and the like.

Among the terms set forth herein, a screen refers to any suitable type of display or other output device which visually displays information to the user. In some embodiments, the screen may be a display or output device (e.g. a touch screen) that is capable of receiving and electronically processing tactile inputs from a user, for example using a stylus or a finger of the user, or by means of another technique for conveying a user selection from the user using the display or output device.

Among the terms set forth herein, an icon refers to a graphical element such as a figure or a symbol displayed on the screen of the device such that a user can easily select a desired function or data. In particular, each icon has a mapping relation with one or more functions being executable in the device, or with any data stored in the device, and is used for processing functions or selecting data in the device. When a user selects one of the displayed icons, the device identifies a particular function or data associated with the selected icon. Then the device executes the identified function or displays or processes the identified data.

Among terms set forth herein, data refers to any kind of information processed by the device, including text and/or images, for example received from any external entities, messages transmitted or received, and information created when a specific function is executed by the device.

In certain embodiments of the present invention, a content view comprises displayed content divided into at least two pages, or divided into at least two subsets of content. In the landscape mode, at least two pages are displayed simultaneously. In the portrait mode, at least one page is displayed. Even though a display mode is changed, an arrangement of a content view may be consistently maintained. For example, only the number of displayed pages may be changed when the display mode is changed. In the present invention, a page may contain a plurality of panels. These panels may be arranged in the form of grid on the page. Content may be located in one or more of the panels. A panel is defined herein to be a region where content may be located. The panels may be the same size or may be different sizes. Adjacent panels may be combined with each other. Content may be located in such combined panels. However, panels in different pages are optionally set to not be capable of being combined. An edit screen of a content view may offer an outline of panels and/or of pages, in which the outline may be in the form of a distinctive border or appearance identifying the limits of the panels and/or pages. After editing is finished, the outline may disappear.

A content view display method and apparatus of embodiments of the present invention may be applied to or incorporated in a device (e.g. a mobile device), for example a mobile phone, a smart phone, a tablet PC, a handheld PC, a portable multimedia player (PMP), a digital broadcasting player, a personal digital assistant (PDA), a music player (e.g., an MP3 player), a digital camera, a portable game console, and the like.

The content view display method and apparatus of certain embodiments of the present invention simultaneously display all pages of a content view in the landscape mode and display at least one page in the portrait mode.

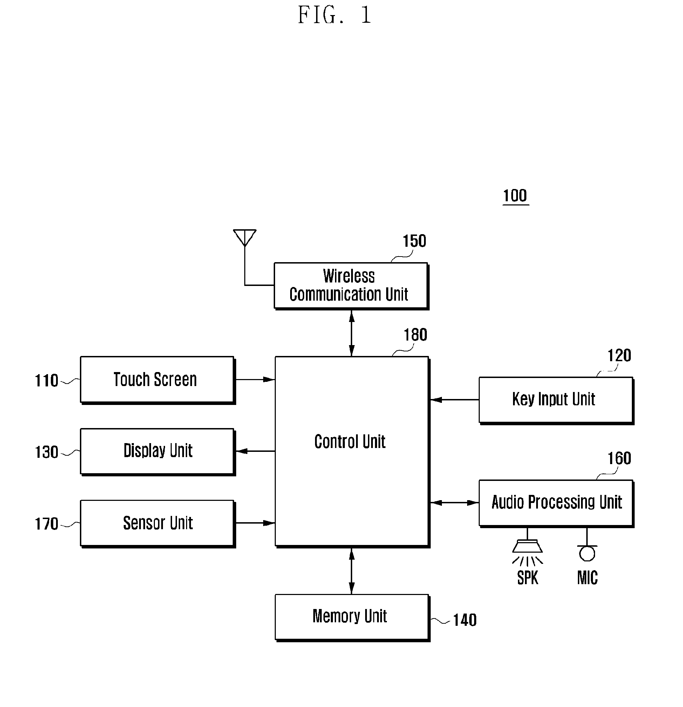

FIG. 1 is a block diagram illustrating an example configuration of a mobile device in accordance with an exemplary embodiment of the present invention. Referring to FIG. 1, the mobile device 100 may include a touch screen 110, a key input unit 120, a display unit 130, a memory unit 140, a wireless communication unit 150, an audio processing unit 160, a microphone (MIC), a speaker (SPK), a sensor unit 170, and a control unit 180.

The touch screen 110 may be disposed on the front of the display unit 130, or may be a separate device. The touch screen 110 creates (e.g. detects) a touch event in response to user's touch gesture and sends signals representing the touch event to the control unit 180. Then the control unit 180 recognizes the touch event signals received from the touch screen 110 and controls the above-mentioned elements in response to the touch event. In particular, the control unit 180 may edit a content view in response to the touch event. The type of touch gestures may be classified into a touch, a tap, a long tap, a drag, a sweep, and the like. The touch refers to a touch gesture in which a touch input tool (e.g., a finger or stylus pen) is placed in contact with a point on the touch screen 110. The tap refers to a touch gesture in which a touch is made on a point on the touch screen 110 using a touch input tool (e.g. drop), and then the touch is released from the touch point without moving the touch input tool while in contact with the touch screen. The long tap refers to a tap touch gesture in which the duration of the touch exceeds a certain threshold. The drag refers to a touch gesture in which a touch input tool is moved in an arbitrary direction while maintaining a touch on the touch screen 110. The sweep, also referred to as a flick, refers to a touch gesture in which a touch input tool is moved at a speed exceeding a certain threshold while maintaining a touch on the touch screen 110 and then the touch input tool is released from the touch screen 110. The touch screen 110 may be any suitable type of touch screen, numerous examples of which are known in the art, including a resistive type, a capacitive type, an electromagnetic induction type, a pressure type, and the like.

The key input unit 120 includes a plurality of input keys and function keys to receive user's input actions and to set up various functions. The function keys may have navigation keys, side keys, shortcut keys, and any other special keys defined to perform particular functions. Additionally, the key input unit 120 creates (e.g. detects) key events associated with setting and function control of the mobile device 100, and then delivers signals representing the key events to the control unit 180. Such key events may include power on/off events, volume regulating events, screen on/off events, and the like. The control unit 180 may control the above-mentioned elements in response to these key events.

The display unit 130 converts, under the control of the control unit 180, digital data received from the control unit 180 into analog data, and then displays the analog data. In addition, the display unit 130 may display various screens associated with the use of the mobile device, such as a lock screen, a home screen, an application executing screen, a background screen, a content view, and the like. An application may also be referred to as an app or an applet, in a manner known in the art. The lock screen may be provided when the display unit 130 is activated. If a particular touch gesture is detected for unlocking a lock screen on the display unit 130, the control unit 180 may control the display unit 130 to display the home screen or the app executing screen instead of the lock screen. The home screen may contain a plurality of app icons corresponding to various apps. When one of the app icons is selected by a user, the control unit 180 executes a corresponding app. Then the display unit 130 displays a specific executing screen for executing the selected app. Also, under the control of the control unit 180, the display unit 130 may display one of the above screens as a main screen and further display one of the other screens as a sub-screen overlapped with the main screen. For example, the display unit 130 may display the background screen and also display the content view thereon. Moreover, under the control of the control unit 180, the display unit 130 provides a dual display mode. As mentioned above, a dual display mode refers to a landscape mode and a portrait mode. The display unit 130 may display simultaneously all pages of a content view in the landscape mode and display at least one page of a content view in the portrait mode. Meanwhile, the display unit 130 may be implemented by any known type of planar display panel such as LCD (liquid crystal display), OLED (organic light emitting diodes), AMOLED (active matrix OLED), or any other known display devices and technologies.

The memory unit 140 may store an operating system (OS) of the mobile device, various applications, and various data such as text, audio and video. The memory unit 140 may include a program region and a data region. The data region of the memory unit 140 may store data created in the mobile device 100 or downloaded from other devices and sources external to the mobile device 100 during the use of the mobile device 100. Additionally, the data region may store the above-mentioned screens to be displayed on the display unit 130 and various setting values required for the operation of the mobile device 100, and also temporarily store data cut or copied from one source or screen for pasting to another location in memory or elsewhere, or another screen. The program region of the memory unit 140 may store the OS for booting and operating the mobile device 100, and various applications. In particular, the program region stores a specific application that edits a content view in consideration of a dual display mode.

The wireless communication unit 150 performs a voice call, a video call, a data communication, or a digital broadcasting reception under the control of the control unit 180. For such operations, the wireless communication unit 150 may include a mobile communication module (e.g., a 3rd generation mobile communication module, a 3.5th generation mobile communication module, a 4th generation mobile communication module, etc.), a short-distance communication module (e.g., a Wi-Fi module), and a digital broadcast module (e.g., a Digital Multimedia Broadcasting (DMB) module).

The audio processing unit 160 converts digital audio data received from the control unit 180 into analog audio data and then delivers the analog audio data to the speaker (SPK). Also, the audio processing unit 160 converts analog audio data, such as voice data, received from the microphone (MIC) into digital audio data and then delivers the digital audio data to the control unit 180.

The sensor unit 170 detects information associated with location, moving speed, moving direction, and/or rotation or orientation of the mobile device 100, and then delivers the detected information to the control unit 180. For such functions, the sensor unit 170 may include an acceleration sensor or the like. The sensor unit 170 converts a detected physical quantity into electrical signals, converts the electrical signals into data through analog-to-digital (AD) conversion, and then delivers the AD data to the control unit 180. In particular, when the mobile device 100 rotates, the sensor unit 170 delivers rotation data to the control unit 180. Then the control unit 180 detects the rotation of the mobile device 100 and, in response to the detected rotation, changes a display mode of the screen.

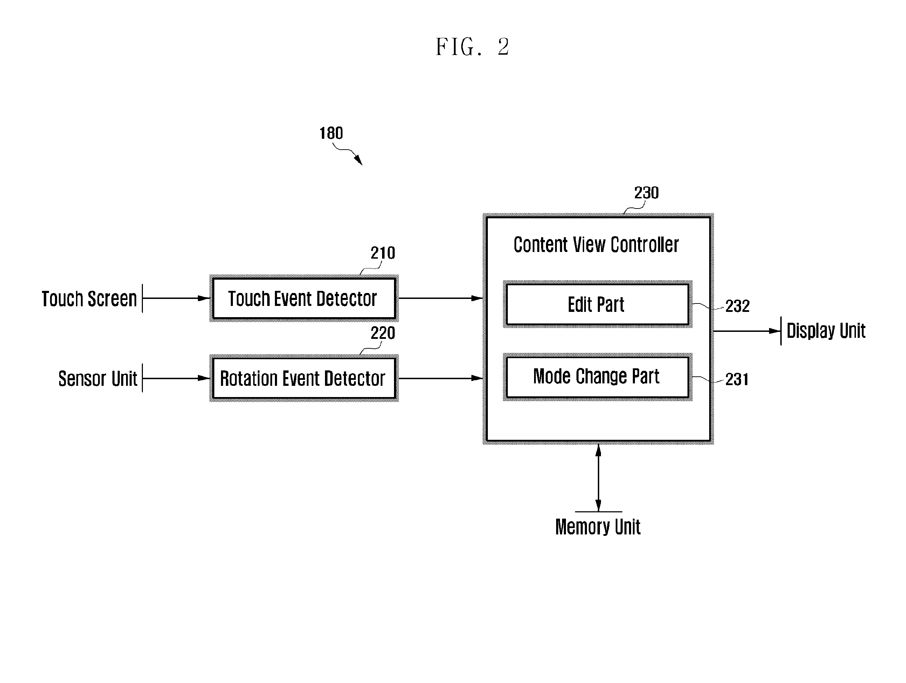

The control unit 180 controls the whole set of operations of the mobile device 100, controls signal flow between elements of the mobile device 100, and processes data. In addition, the control unit 180 may control power supply from a battery to the elements of the mobile device 100. Additionally, the control unit 180 executes various kinds of applications stored in the program region. In particular, the control unit 180 performs a content view display method of the present invention. For performing the content view display method, the control unit 180 may include elements shown in FIG. 2.

FIG. 2 is a block diagram illustrating a detailed example configuration of the control unit 180 shown in FIG. 1. Referring to FIG. 2, the control unit 180 may include a touch event detector 210, a rotation event detector 220, and a content view controller 230.

The touch event detector 210 is connected to the touch screen 110. The touch event detector 210 detects a touch event from the touch screen 110 and delivers the detected touch event to the content view controller 230. Such a touch event includes a touch point, a touch moving direction, touch gesture information, and the like.

The rotation event detector 220 is connected to the sensor unit 170. The rotation event detector 220 detects a rotation event from the sensor unit 170 and delivers the detected rotation event to the content view controller 230. Such a rotation event may include angle information, orientation information, and the like. In some embodiments, a rotation event of the mobile device may be determined in other ways, for example indicated by a user input or a state change of an executing application, rather than using a rotation event detector. In this case, the rotation event detector 220 may be omitted.

The content view controller 230 is connected to the display unit 130 and to the memory unit 140. The content view controller 230 receives a content forming a content view from the memory unit 140. Also, the content view controller 230 controls the display unit 130 to display the received content view. In particular, based on the touch event received from the touch event detector 210, the content view controller 230 may edit a content view and store the edited content view in the memory unit 140. Additionally, the content view controller 230 controls the display unit 130 to display the edited content view. In certain embodiments, a display mode of the display unit 130 may be fixed regardless of a rotation of the mobile device 100, if a user desires. Unless fixed, the content view controller 230 may determine and select a display mode of the display unit 130 depending on a rotation event received from the rotation event detector 220. Then the content view controller 230 may control the display unit 130 to display a content view according to the selected display mode. A more detailed description of the content view controller 230 is described below.

Referring to FIG. 2, the content view controller 230 is composed of a mode change part 231 and an edit part 232, which are capable of controlling the display unit 130 to display screens and to alter such screens, as described herein. The mode change part 231 detects a rotation event from the sensor unit 170 and, based on the detected rotation event, selects a display mode. If the selected display mode is identical to a current display mode, the mode change part 231 maintains the current display mode. If the selected display mode is different from a current display mode, the mode change part 231 sets the selected display mode to be the current display mode. Namely, the mode change part 231 controls the display unit 130 to display the screen in the selected display mode. Therefore, in the landscape mode, the display unit 130 may display simultaneously all pages of a content view. Also, in the portrait mode, the display unit 130 may display at least one of the pages of a content view.

While a content view is displayed, the edit part 232 determines whether the detected touch event is for a content edit operation. For example, if a user long-taps any point of a content view, the touch screen 110 creates a touch event associated with a long tap and sends touch event signals to the touch event detector 210. Then the touch event detector 210 detects the touch event and delivers the detected touch event to the edit part 232. A touch event for a content edit operation is not limited to a long tap. Any other touch gesture, e.g., a two taps or a double tap, may be used for selecting a content edit operation. Meanwhile, if the detected touch event corresponds to a long tap as a result of the determination by the edit part 232, the edit part 232 controls the display unit 130 to display an edit screen of a content view. Specifically, the edit part 232 may control the display unit 130 to display outlines of panels. Alternatively, the outline of a panel in which content is located may optionally not be displayed. In another alternative embodiment, the edit part 232 may control the display unit 130 to display only outlines of panels without content. In other words, the edit part 232 may control the display unit 130 to display only the outline of an empty panel in which no content is located. Additionally, the edit part 232 controls the display unit 130 to display the outline of a page and to widen a space between pages. Therefore, a user can distinguish pages from each other.

Furthermore, the edit part 232 may locate (e.g. display) content in a panel in response to a specific touch gesture, e.g., a tap. Specifically, when a user taps a panel, the edit part 232 may control the display unit 130 to display content candidates around the tapped panel. If any content is selected among content candidates by a tap, the edit part 232 may locate (e.g. display) the selected content in the panel. Also, the edit part 232 may combine adjacent panels in response to a specific touch gesture, e.g., a drag. In addition, the edit part 232 may locate content in the combined panel. However, the edit part 232 may optionally be configured to not allow panels of different pages to be combined so that any specific portion of content may not be displayed spanning two pages.

Additionally, when an edit closing event is received from the touch event detector 210, the edit part 232 stores an edited content view in the memory unit 140. Then the edit part 232 controls the display unit 130 to display the edited content view.

According to a digital convergence tendency to combine multiple digital functions and operations in a single electronic device, the mobile device 100 of certain alternative embodiments of the present invention may additionally or alternatively include any other elements or components, for example a Global Positioning System (GPS) module or a camera module. Meanwhile, as will be understood by those skilled in the art, some of the above-mentioned elements in the mobile device 100 may be omitted or replaced with other elements and components. In addition, or alternatively, to the touch screen 110 and the key input unit 120, a touch pad, a trackball, a keyboard, etc. may be used as an input unit.

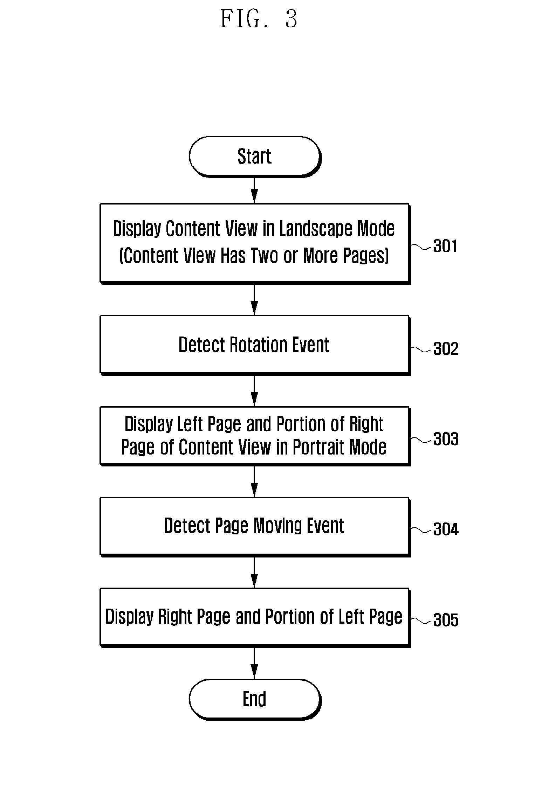

FIG. 3 is a flow diagram illustrating a content view display method in accordance with the exemplary embodiment of the present invention. Referring to FIG. 3, the display unit 130 may display, under the control of the control unit 180, a content view in the landscape mode in step 301. Here, the content view contains at least two pages. For the purpose of explanation only, in the examples described hereinafter, the content view is composed of two pages, for example, a left page and a right page, or alternatively a top page and a bottom page.

While the content view is displayed in the landscape mode, the control unit 180 may detect a rotation event in step 302. Then the control unit 180 determines a display mode, based on the detected rotation event. If the determined display mode is the portrait mode, the control unit 180 changes a display mode of the content view from the landscape mode to the portrait mode in step 303. Namely, in step 303, the display unit 130 may display, under the control of the control unit 180, the left page and a portion of the right page in the portrait mode.

While the left page and a portion of the right page are displayed in the portrait mode, the control unit 180 may detect a page moving event in step 304. For example, when a user touches the right page, the touch screen 110 creates (e.g. detects) a related touch event and delivers the created touch event to the control unit 180. In response to the touch event, the control unit 180 controls the display unit 130 to simulate turning over the displayed electronic pages. Namely, under the control of the control unit 180, the display unit 130 may display the right page and a portion of the left page in step 305. When the landscape mode is changed to the portrait mode as discussed above, the content view is divided into two pages with a previous arrangement of contents maintained in the pages. Therefore, a user can intuitively use contents regardless of a change of a display mode, since the arrangement of contents does not change as the display mode changes.

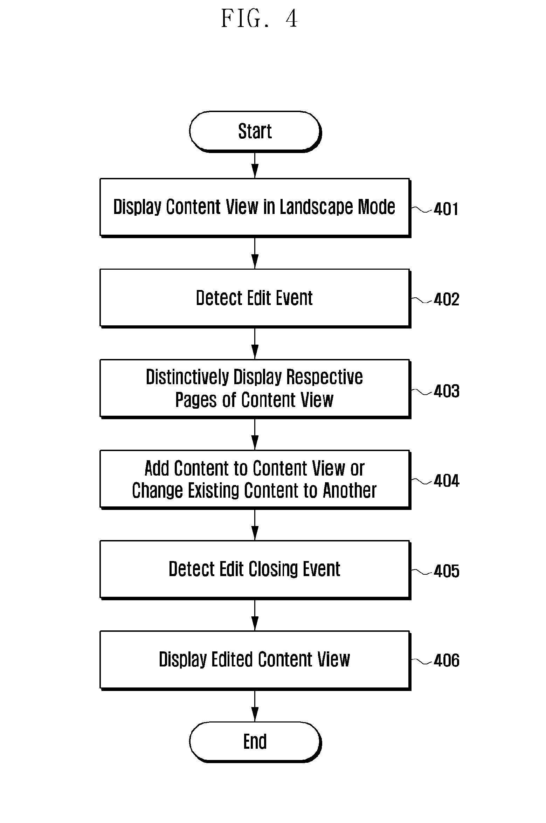

FIG. 4 is a flow diagram illustrating a content view display method in accordance with an alternative exemplary embodiment of the present invention. Referring to FIG. 4, the display unit 130 may display, under the control of the control unit 180, a content view in the landscape mode in step 401. Then the control unit 180 may detect an edit event in step 402. If the edit event is detected, the control unit 180 may control the display unit 130 to display an edit screen of the content view in the landscape mode in step 403. Namely, in step 403, the display unit 130 distinctively displays respective pages of the content view under the control of the control unit 180. For example, the display unit 130 may display the outlines of respective pages, for example such that the borders of the outlines provide a distinct appearance to the outlines relative to the background color of the screen and/or the content inside the outlines.

While the edit screen is displayed, the control unit 180 may add any content to the first page of the content view in response to a specific touch event from a user in step 404. Additionally, in step 404, the control unit 180 may change any existing content on the first page to be on another page in response to a relevant touch event from a user. Also, in step 404, the control unit 180 may combine adjacent panels in response to a corresponding touch gesture from a user and then locate any content in the combined panels. However, in an alternative embodiment, the control unit 180 may optionally be set to not combine panels of different pages.

Meanwhile, when the edit screen is displayed, the control unit 180 may detect an edit closing event in step 405. If the edit closing event is detected, the control unit 180 may control the display unit 130 to display in step 406 the content view edited in step 404.

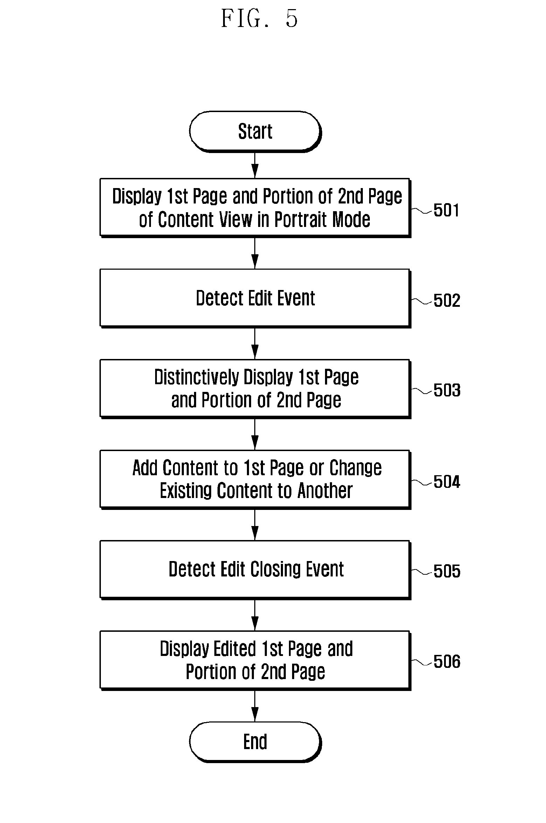

FIG. 5 is a flow diagram illustrating a content view display method in accordance with a further alternative exemplary embodiment of the present invention. Referring to FIG. 5, the display unit 130 may display, under the control of the control unit 180, a content view in the portrait mode in step 501. Namely, the display unit 130 may display the first page and a portion of the second page. Then the control unit 180 may detect an edit event in step 502. If the edit event is detected, the control unit 180 may control the display unit 130 to display an edit screen in the portrait mode in step 503. Namely, in step 503, the display unit 130 distinctively displays the first page and a portion of the second page under the control of the control unit 180. For example, the display unit 130 may display the outlines of respective pages, for example such that the borders of the outlines provide a distinct appearance to the outlines relative to the background color of the screen and/or the content and pages inside the outlines. Alternatively, the spacing between pages may be widened from a current spacing distance between pages to provide a distinct appearance of the pages as being separate from each other.

While the edit screen is displayed, the control unit 180 may add any content to the first page in response to a specific touch event from a user in step 504. Additionally, in step 504, the control unit 180 may change any existing content in the first page to be on another page in response to a relevant touch event from a user. In this case, a portion of the second page may not be edited, so a user should turn over pages in order to edit the second page. When a user touches the second page, the control unit 180 may control the display unit 130 to display the second page and a portion of the first page. Then a user may edit the second page. Also, in step 504, the control unit 180 may combine adjacent panels in response to a corresponding touch gesture from a user and then locate any content in the combined panels. However, the control unit 180 may optionally be set to not combine panels of different pages.

Meanwhile, when the edit screen is displayed, the control unit 180 may detect an edit closing event in step 505. If the edit closing event is detected, the control unit 180 may control the display unit 130 to display in step 506 the first page and a portion of the second page which are edited in step 504.

Now, a content view display method of the present invention will be described in detail with reference to examples of screenshots.

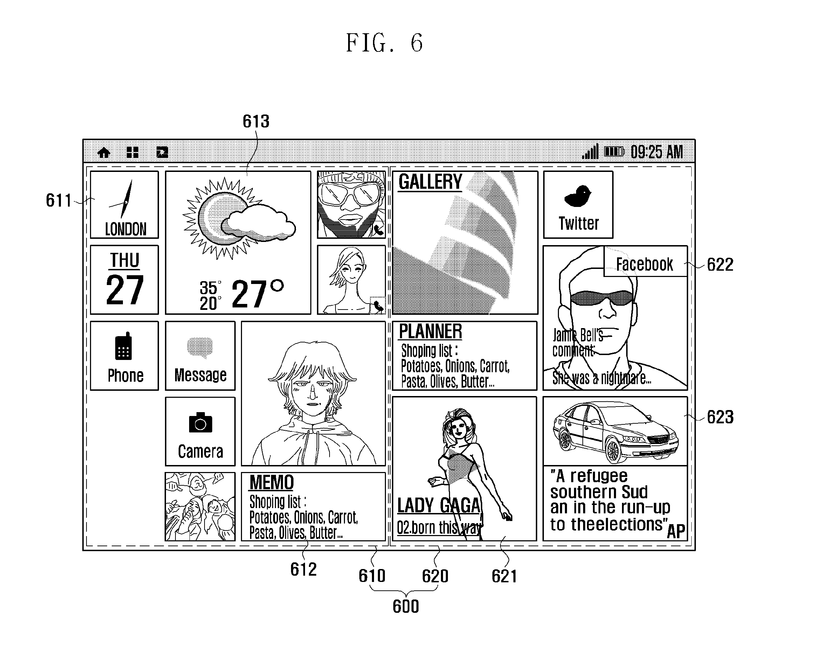

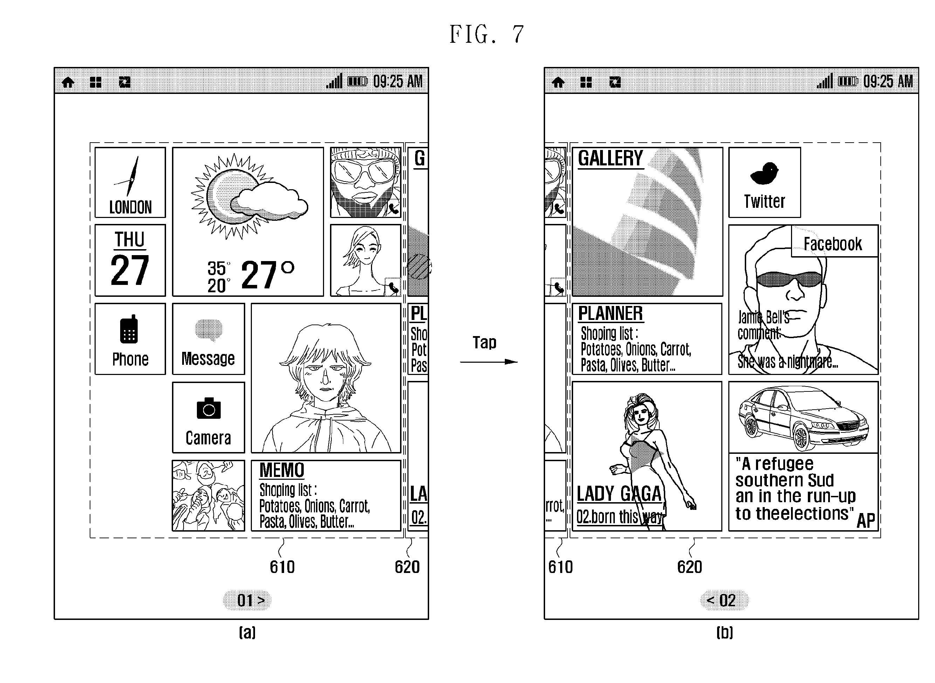

FIGS. 6 to 10B show screenshots illustrating a content view display method in accordance with the exemplary embodiment of the present invention. Referring to FIG. 6, the control unit 180 may control the display unit 130 to display a content view 600 in the landscape mode. Namely, the display unit 130 may display the content view 600 having the first page 610 and the second page 620. As shown in FIG. 6, different-sized contents may be arranged in the content view. For example, content 611 is assigned to one panel, content 612 is assigned to two panels, and content 613 is assigned to four panels. Additionally, the content view 600 contains various types of contents. For example, the content view 600 may contain a clock widget app in the content 611, a memo app in the content 612, a weather widget app in the content 613, a video player app in the content 621, a social network service (SNS) app in the content 622, an image in the content 623, and the like. While the content view 600 is displayed in the landscape mode as shown in FIG. 6, a user may rotate the mobile device 100 at an angle of about 90 degrees. As a result, the control unit 180 may change a display mode of the content view 600 from the landscape mode to the portrait mode as shown in FIG. 7.

Referring to FIG. 7, the control unit 180 may control the display unit 130 to display the content view 600 in the portrait mode. After the display mode is changed from the landscape mode to the portrait mode, the first page 610 and a portion of the second page 620 may be displayed as shown in FIG. 7A. At this time, the first page 610 and a portion of the second page 620 may be relatively larger than the pages 610, 620 shown in FIG. 6. However, the arrangement of contents in the pages 610, 620 is not changed. If a user taps the second page 620, the screen is shifted from FIG. 7A to FIG. 7B. Namely, when any tap is detected on a portion of the second page 620, the control unit 180 may control the display unit 130 to display the second page 620 and a portion of the first page 610 as shown in FIG. 7B. At this time, the second page 620 and a portion of the first page 610 may be relatively larger than the pages 610, 620 shown in FIG. 6. However, the arrangement of contents is not changed.

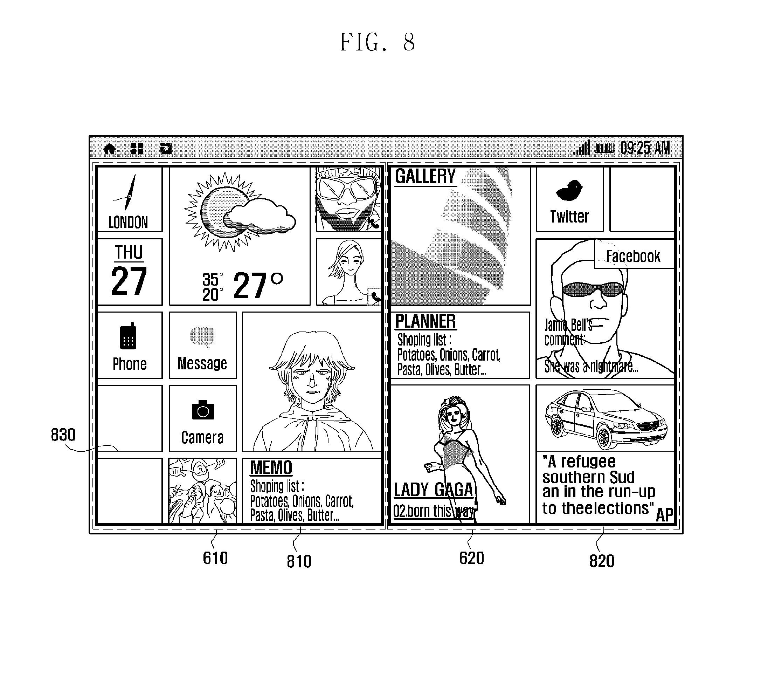

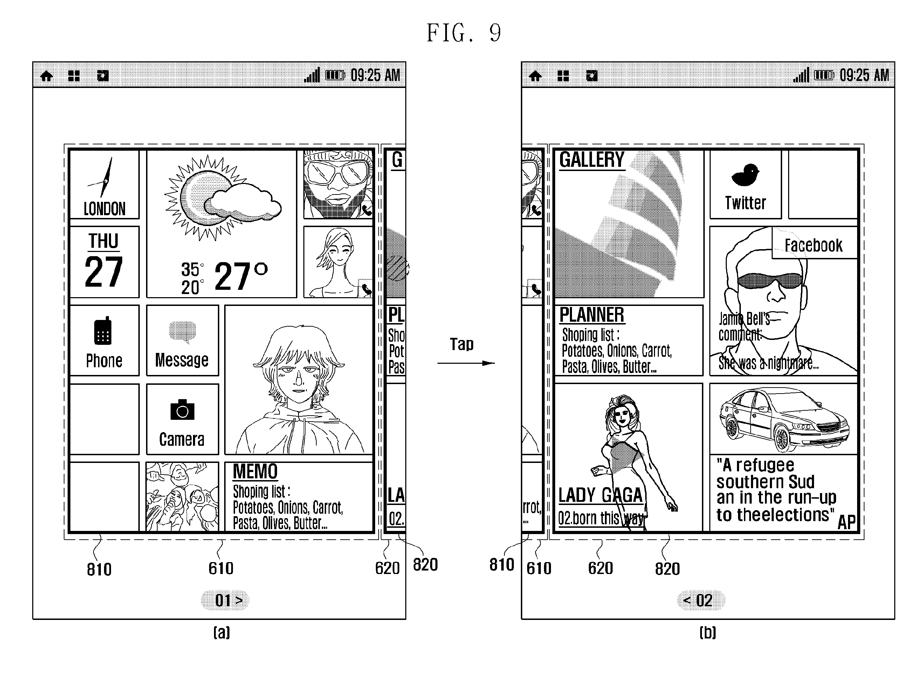

Returning to FIG. 6, while the content view 600 is displayed in the landscape mode, a user may enter a long tap on any point of the content view 600. Then the control unit 180 may control the display unit 130 to display an edit screen of the content view 600 as shown in FIG. 8. Referring to FIG. 8, the display unit 130 displays the edit screen of the content view 600 in the landscape mode. Namely, under the control of the control unit 180, the display unit 130 may display an outline 810 of the first page 610 and an outline 820 of the second page 620. As shown in FIG. 8, the outline 810 includes all panels of content with each border of each panel being displayed, so that the user can view the sizes and shapes of each panel in which content can be displayed. Also, the display unit 130 may display the first page 610 and the second page 620 with a widened space therebetween. In addition, the display unit 130 may display an outline 830 of an empty panel with no content. While the edit screen of the content view 600 is displayed in the landscape mode as shown in FIG. 8, a user may rotate the mobile device 100 at an angle of about 90 degrees. As a result, the control unit 180 may change the display mode of the edit screen from the landscape mode to the portrait mode as shown in FIG. 9.

Referring to FIG. 9, the control unit 180 may control the display unit 130 to display the edit screen in the portrait mode. After the display mode of the edit screen is changed from the landscape mode to the portrait mode, the first page 610 and a portion of the second page 620 may be displayed together with their outlines 810 and 820 as shown in FIG. 9A. At this time, the first page 610 and a portion of the second page 620 may be relatively larger than the pages 610, 620 shown in FIG. 8. If a user taps the second page 620, the display screen is shifted from the screen in FIG. 9A to the screen in FIG. 9B. Namely, when any tap is detected from a portion of the second page 620, the control unit 180 may control the display unit 130 to display the second page 620 and a portion of the first page 610 together with their outlines 810 and 820 as shown in FIG. 9B. At this time, the second page 620 and a portion of the first page 610 may be relatively larger than the pages 610, 620 shown in FIG. 8.

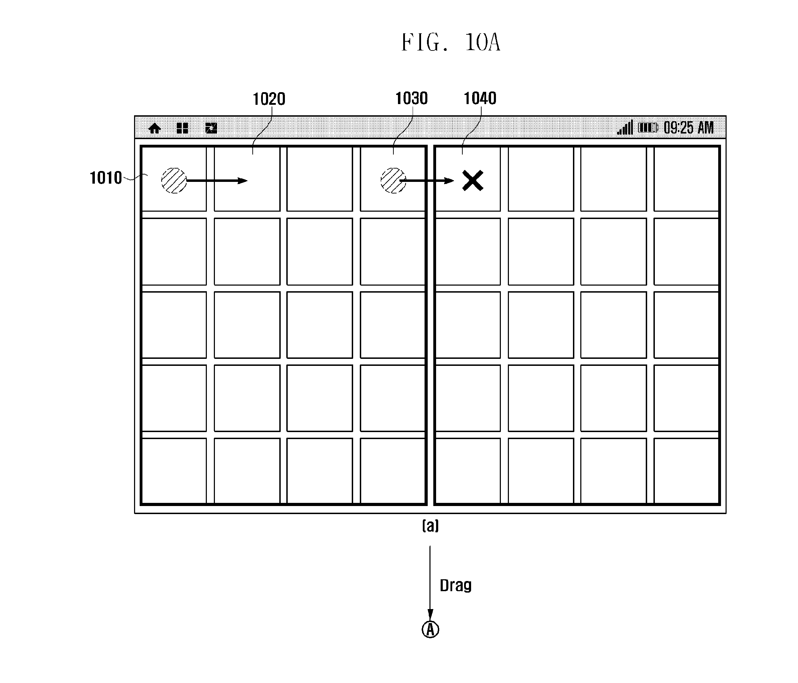

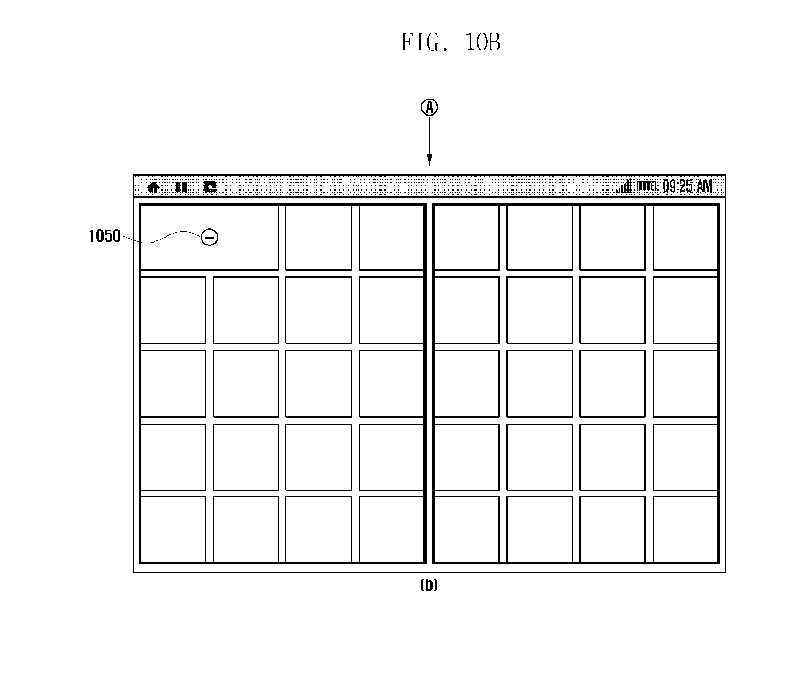

Meanwhile, FIGS. 10A and 10B show the edit screen in the landscape mode without contents. Referring to FIG. 10A, a user may drag a touch point from any selected first panel 1010 anywhere in the edit screen to any selected second panel 1020 anywhere in the edit screen. Then, in response to the drag operation, as indicated by the circled A representing operation by the control unit 180 of the dragging of the touch point from the panel 1010 to the panel 1020, the control unit 180 may combine the first panel 1010 and the second panel 1020 as shown in FIG. 10B. A combined panel may be divided back into separate panels again. For example, as shown in FIG. 10B, the display unit 130 may display a division button 1050 in the combined panel under the control of the control unit 180. When a user taps the division button 1050, the control unit 180 may divide the combined panel back again, as shown in FIG. 10A. Referring again to FIG. 10A, a user may drag a touch point from any selected third panel 1030 anywhere in the edit screen to any selected fourth panel 1040 anywhere in the edit screen. The third panel 1030 and the fourth panel 1040 may be adjacent to each other but located in different pages. Therefore, in response to the drag operation, as indicated by the circled A representing operation by the control unit 180 of the dragging of the touch point from the panel 1030 to the panel 1040, the control unit 180 does not combine the third panel 1030 and the fourth panel 1040. In this case, the control unit 180 may inform a user about a failure of the combination operation through a message displayed by the display unit 130 or output as audio through the speaker (SPK) in FIG. 1.

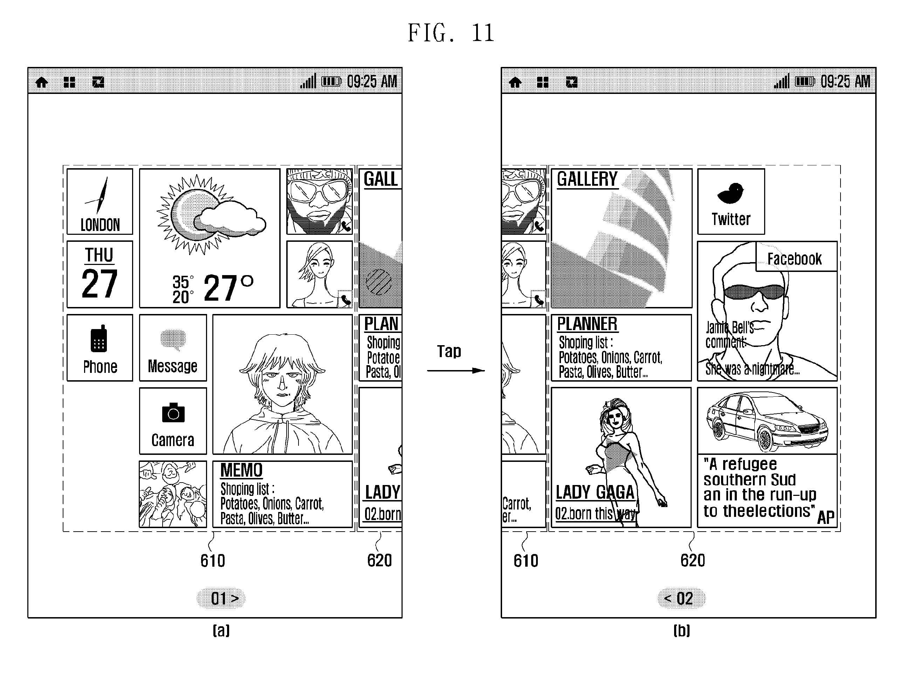

FIG. 11 shows screenshots illustrating a content view display method in accordance with the alternative exemplary embodiment of the present invention. Referring again to FIG. 6, a user may rotate the mobile device 100 when the content view 600 is displayed in the landscape mode. Therefore, the control unit 180 may change a display mode of the content view 600 from the landscape mode to the portrait mode as shown in FIG. 11. After a display mode of the content view 600 is changed from the landscape mode to the portrait mode, the first page 610 and a portion of the second page 620 may be displayed as shown in FIG. 11A. At this time, the first page 610 and a portion of the second page 620 may have the same size as shown in FIG. 6. If a user taps the second page 620, the displayed screen is shifted from the screen in FIG. 11A to the screen in FIG. 11B. Namely, when any tap is detected from the portion of the second page 620, the control unit 180 may control the display unit 130 to display the second page 620 and a portion of the first page 610 as shown in FIG. 11B. At this time, the second page 620 and the portion of the first page 610 may have the same size as shown in FIG. 6.

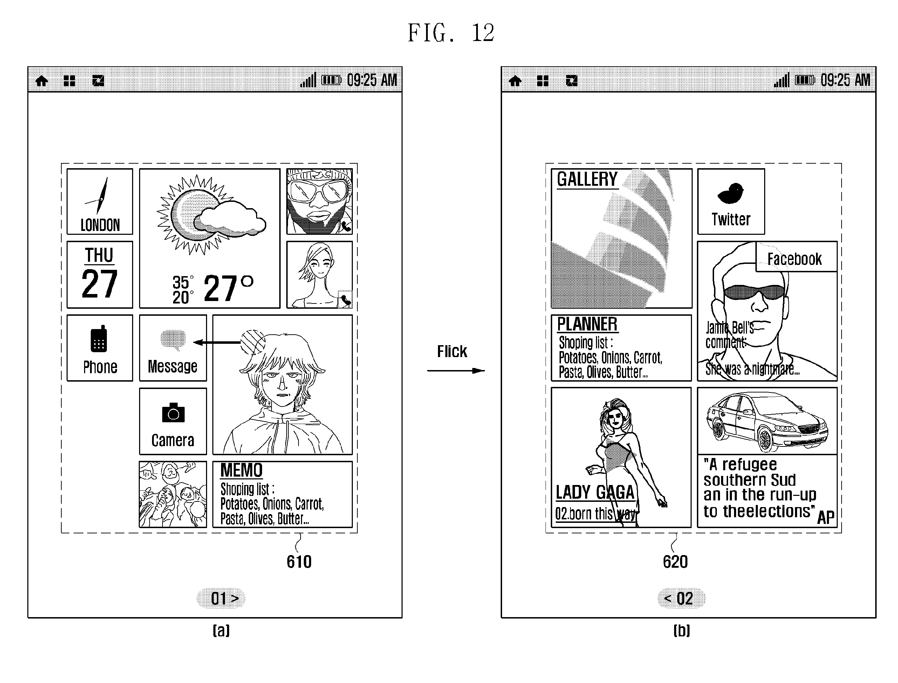

FIG. 12 shows screenshots illustrating a content view display method in accordance with the further alternative embodiment of the present invention. Referring again to FIG. 6, a user may rotate the mobile device 100 when the content view 600 is displayed in the landscape mode. Therefore, the control unit 180 may change a display mode of the content view 600 from the landscape mode to the portrait mode as shown in FIG. 12. After a display mode of the content view 600 is changed from the landscape mode to the portrait mode, the first page 610 may be displayed as shown in FIG. 12A. If a user flicks the first page 610 in a leftward direction, represented by the leftward arrow in FIG. 12A, the displayed screen is shifted from the screen in FIG. 12A to the screen in FIG. 12B. Namely, when a leftward flick is detected on the first page 610, the control unit 180 may control the display unit 130 to display the second page 620 as shown in FIG. 12B.

Many of the illustrative examples of the present invention shown and described herein involve a change in the display mode from landscape to portrait. However, it will be understood that all of such illustrative examples may be performed in a similar or identical manner with the display mode changing from portrait to landscape, or from landscape to portrait and back to landscape, merely by rotating the mobile device 100 by appropriate angles corresponding to either of the landscape or portrait orientations.

The present invention is described herein with reference to flowcharts, flowchart illustrations of user interfaces, methods, apparatuses, and computer program products according to the exemplary embodiments of the present invention. It will be understood that each block of the flowchart illustrations, and combinations of blocks in the flowchart illustrations, can be implemented by computer program instructions. These computer program instructions can be provided to a processor of a general purpose computer, a special purpose computer, or other programmable data processing apparatus to produce a machine, such that the instructions, which are executed via the processor of the computer or other programmable data processing apparatus, create devices, components, and systems for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction devices, components, and systems that implement the function specified in the flowchart block or blocks. The computer program instructions may also be loaded into a computer or other programmable data processing apparatus to cause a series of operational steps to be performed on the computer or other programmable apparatus to produce a computer implemented process such that the instructions that are executed by the computer or other programmable apparatus provide steps for implementing the functions specified in the flowchart block or blocks.

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The above-described apparatus and methods and other embodiments of the present invention can be implemented in any combination of hardware, firmware and/or software or computer code that can be stored in a non-transitory recording medium such as a CD ROM, a RAM, a ROM, a floppy disk, DVDs, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any media such as communication signals transmitted by wire/wireless connections, and their equivalents. The computer readable recording medium can also be distributed in network coupled computer systems so that the computer readable code is stored and executed in a distributed fashion.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present invention has been particularly shown and described with reference to an exemplary embodiment thereof, it will be understood by those skilled in the art that various changes in form and details may be made therein without departing from the scope of the invention as defined by the appended claims.

## Claims

1. A method for displaying a content view in a mobile device providing a dual display mode, the method comprising:
simultaneously displaying at least two pages of the content view in a landscape mode; and
displaying at least one of the at least two pages of the content view when a display mode of the mobile device is changed from the landscape mode to a portrait mode,
wherein each page of the content view includes a plurality of panels, wherein content is located in each of the panels, and wherein an arrangement of the panels is maintained regardless of the change of the display mode.

2. The method of claim 1, wherein the displaying of at least one page of the content view includes displaying a first page and a portion of a second page among the at least two pages of the content view.

3. The method of claim 2, wherein the displaying of at least one page of the content view further includes displaying the second page and a portion of the first page when a page moving event is detected.

4. The method of claim 3, wherein the page moving event includes a touch event on the second page.

5. The method of any preceding claim, further comprising:
distinctively displaying the at least two pages of the content view when an edit event is detected while the content view is displayed in the landscape mode.

6. The method of claim 5, wherein the distinctively displaying of the pages of the content view includes displaying outlines of the at least two pages of the content view.

7. The method of claim 5 or 6, wherein the distinctively displaying of the pages of the content view includes displaying the at least two pages with a widened space therebetween.

8. The method of any of claims 2 to 7, further comprising:
distinctively displaying the first page and the portion of the second page when an edit event is detected while the first page and the portion of the second page are displayed in the portrait mode.

9. The method of any preceding claim, wherein the displaying of at least one page of the content view includes:
detecting a rotation event from a sensor unit detecting information associated with a rotation of the mobile device;
determining the display mode of the mobile device, based on the detected rotation event; and
displaying at least one of the at least two pages of the content view when the determined display mode is the portrait mode.

10. An apparatus for displaying a content view in a mobile device providing a dual display mode, the apparatus comprising:
a display unit configured to simultaneously display at least two pages of the content view in a landscape mode or to display at least one of the at least two pages of the content view; and
a control unit configured to control the display unit so as to change a display mode from the landscape mode to a portrait mode,
wherein each page of the content view includes a plurality of panels, wherein content is located in each of the panels, and wherein an arrangement of the panels is maintained regardless of the change of the display mode.

11. The apparatus of claim 10, wherein the control unit is configured to control the display unit to display a first page and a portion of a second page among the at least two pages of the content view when the display mode of the display unit is determined to be the landscape mode.

12. The apparatus of claim 11, wherein the control unit is configured to control the display unit to display the second page and a portion of the first page when a page moving event is detected from an input unit while the first page and the portion of the second page are displayed.

13. The apparatus of claim 12, further comprising:
a touch screen as an input unit,
wherein the page moving event includes a touch event on the second page displayed on the touch screen.

14. The apparatus of any of claims 10 to 13, wherein the display unit is configured to display the at least two pages of the content view distinctively relative to a remainder of the content view when an edit event is detected from an input unit while the content view is displayed in the landscape mode.

15. The apparatus of claim 14, wherein the display unit is configured to display outlines of the at least two pages of the content view.

16. The apparatus of claim 14 or 15, wherein the display unit is configured to display the at least two pages with a widened space therebetween.

17. The apparatus of any of claims 11 to 16, wherein the control unit is configured to control the display unit to distinctively display the first page and the portion of the second page when an edit event is detected from an input unit while the first page and the portion of the second page are displayed in the portrait mode.

18. The apparatus of any of claims 10 to 17, further comprising:
a sensor unit configured to detect information associated with a rotation of the mobile device,
wherein the control unit is configured to detect a rotation event from the sensor unit, to determine the display mode of the mobile device, based on the detected rotation event, and to control the display unit to display the content view in the determined display mode.
